# EUROPEAN PATENT SPECIFICATION

(11) **EP 3 619 169 B1**
(45) Date of publication and mention of the grant of the patent: **01.09.2021**
(21) Application number: 18728232.2
(22) Date of filing: 02.05.2018
(51) Int. Cl.: C02F 1/28

(54) **AN ELEMENT FOR ENABLING A FLOW-INTERCEPTION VALVE IN FILTRATION SYSTEMS USING REPLACEABLE CARTRIDGES**
ELEMENT ZUR ERMÖGLICHUNG EINES DURCHFLUSSUNTERBRECHUNGSVENTILS IN FILTRATIONSSYSTEMEN UNTER VERWENDUNG AUSTAUSCHBARER PATRONEN
ÉLÉMENT POUR ACTIVER UNE SOUPAPE D'INTERCEPTION DE FLUX DANS DES SYSTÈMES DE FILTRATION À L'AIDE DE CARTOUCHES REMPLAÇABLES

(30) Priority: 02.05.2017 IT 201700047102
(43) Date of publication of application: 11.03.2020
(73) Proprietor: Laica S.p.A., 36021 Barbarano Mossano (VI) (IT)
(72) Inventor: MORETTO, Maurizio, 36100 Vicenza (IT)
(74) Representative: Locas, Davide
(86) International application number: PCT/IB2018/053048
(87) International publication number: WO 2018/203257

(56) References cited:
- WO-A1-2012/150466
- WO-A1-2015/071415
- DE-A1-102009 000 231
- GB-A- 2 543 620

## Description

The invention refers to an element for enabling a flow-interception valve in filtration systems using replaceable cartridges, particularly in percolation filtration systems for making drinking water and other beverages.

There are known percolation filtration systems, typically in the form of a pitcher, with a dividing element separating the pitcher into an upper compartment for holding water to be filtered and a lower compartment for holding filtered water. The two tanks only communicate with each other through a pipe in which a filter cartridge is placed, such that the entire flow passes through it. A normally-closed interception valve is placed in the pipe downstream of the cartridge, which, when the filter cartridge is inserted into the pipe, is opened by an enabler element generally belonging to the filter cartridge. An initial example of this technology is described in international patent application WO 2009 015679 and the German patent application DE 10 2009 000 231 A1.

Another example can be found in international patent application WO 2016 120174.

This second example uses a relatively complex valve system, since there is a need for the valve shutter to perform a combined translation and rotation movement, the cartridge, or some other actuator, is required to be provided with a corresponding spiral surface of sufficiently precise shape and size to be coupled adequately to the complementary surfaces made on the shutter. Indeed, it must be pointed out that even small discrepancies in shape may make the cartridge ineffective, insofar as it would not be capable of correctly opening the valve when placed in its seat.

An enabler element developed for the purpose of adapting to use with various types of interception valves developed by filtering pitcher manufacturers is described in international patent application WO 2012/168880.

Consequently, the technical problem underlying the present invention is to provide a valve enabler element that improves upon known solutions and overcomes one or more of the drawbacks found in the prior art.

An additional purpose of the present invention is to provide an enabler element that achieves effective opening of a valve in percolation filtration systems. Another purpose of the invention is to provide an enabler element that is particularly reliable in use.

Yet another purpose of the present invention is to provide an enabler element that is not particularly sensitive to dimensional differences which may occur in the manufacturing thereof.

This problem is solved and this purpose is achieved by an enabler element for a flow-interception valve in filtration systems using replaceable cartridges, according to claim 1.

The enabler element according to the present invention avoids the need to rotate the valve shutter in order to open the valve. Advantageously, the movement of the shutter is not achieved by means of a abutment between the enabler element and the shutter, thus making the movement of the shutter more precise and reliable. In actuality, the invention makes it possible to hold and lift the shutter by means of a device designed for this purpose, thus allowing the valve to be opened precisely and reliably.

The preferred features of the invention are defined in the dependent claims.

In one embodiment, the shutter rotates about an axis of rotation and the holding element is designed to hold the shutter once it has been grasped in at least the translation direction parallel to the axis of rotation.

Preferably, the holding element comprises a resiliently deformable portion. Preferably, the enabler element comprises a support portion from which the holding element extends.

Preferably, the resiliently deformable portion is made as a projecting body that extends from the support portion.

Preferably, the projecting body and/or the resiliently deformable portion is a tubular body.

Preferably, the resiliently deformable portion is located at an open end of the projecting body.

Preferably, said projecting body comprises a notch made at the open end. Preferably, the tubular body comprises at least a pair of notches that are made parallel to an axial extension of the projecting body.

Preferably, the tubular body widens at the open end.

Preferably, the tubular body has dimensions such that, when it receives the portion of the shutter, inside walls of the projecting body abuts the portion of the shutter in such a way as to be stressed elastically.

Preferably, the lifting device comprises a resilient body designed in such a way as to urge said holding element in a lifting direction after contact with an abutment surface of the filtration system.

Preferably, the resilient body is connected to the holding element by means of at least one transverse extension designed so that, when said holding element is inserted into the valve passage, the resilient body is moved outside the valve passage and abuts a bottom wall of a dividing element of the filtration system, from which the valve passage extends.

Preferably, the enabler element comprises a abutment edge capable of defining an end-of-travel position for insertion of the holding element into the valve passage, said holding element and said resilient body extending in a direction parallel to the lifting direction such that, when the holding element is in the end-of-travel position, the resilient body is compressed.

Preferably, the abutment edge is defined on the holding element.

Preferably, the abutment edge is defined on the resilient body.

Preferably, in use the resilient body has an extension in a direction parallel to the development direction of the valve passage that is greater than the extension of the holding element.

Preferably, the resilient body comprises a flexible blade.

Preferably, the enabler element further comprises an element for limiting or preventing rotation of the enabler element in relation to the valve passage when the holding element is inserted in the valve passage.

Preferably, the resilient body is designed to abut an upper edge on which said abutment surface of the valve passage is defined, when said holding element is inserted into the valve passage.

Preferably, the resilient body comprises a helical spring.

Preferably, the holding element is rotatably connected to the lifting device.

Preferably, the resilient body comprises a portion made of plastic material that is resiliently deformable in terms of bending or compression.

Preferably, the portion made of resiliently deformable plastic material extends along the perimeter to the holding element.

Preferably, the lifting device comprises a float.

Preferably, the lifting device is connected to the replaceable cartridge.

Preferably, the enabler element comprises a coupling portion for coupling to the replaceable cartridge, said resilient body connecting said coupling portion and said holding element and being provided with a substantially rigid portion designed to abut the abutment surface and to deform said resilient body, thus pushing the holding element upwards following insertion of the replaceable cartridge into a respective seat defined in the filtration device.

Preferably, the coupling portion comprises a sleeve that partially encloses the replaceable cartridge.

Preferably, the resilient body is connected to the replaceable cartridge, the enabler element comprising an extension of the holding element that extends through the replaceable cartridge so as to be accessible on a side facing the outside of a seat for coupling to the replaceable cartridge.

Preferably, the extension defines a connecting pipe that connects to the holding element and comprises an opening that opens inside said replaceable cartridge in a position so as to receive liquid filtered by filtration material and to direct it toward the holding element.

Preferably, the lifting device comprises an element capable of interacting magnetically with a corresponding element secured to, or which can be secured to, the replaceable cartridge.

Preferably, the lifting device is connected to a sealing edge of the filter cartridge.

The features and benefits of the invention will become clearer from the detailed description of some of its non-limiting examples of embodiments, in reference to the appended drawings, in which:
- figures 1 and 1A are a schematic illustration of a cross-sectional side view and a corresponding detail view of a filtration device in which the enabler element according to the present invention is used;
- figures 2 and 2A are a schematic illustration of a cross-sectional front view and a corresponding detail view of the filtration device of figure 1, in which an enabler element according to the present invention is inserted;
- figures 3 and 3A are a schematic illustration of a cross-sectional front view and a corresponding detail view of the filtration device of figure 2, with the enabler element according to the present invention inserted along with a filter cartridge;
- figures 4A and 4B are, respectively, a side view and a perspective view from the bottom of the enabler element of figure 3;
- figure 5 is a perspective view from the bottom of an embodiment variant of the enabler element of figure 3;
- figures 6A and 6B are two schematic side views of an embodiment variant in which the enabler element is connected to a filter cartridge;
- figures 7 to 11 are detailed illustrations of a cross-sectional side view of additional embodiments of the enabler element according to the present invention;
- figure 12 is a detailed illustration of a cross-sectional front view of an additional embodiment of the enabler element according to the present invention;
- figures 13 and 13A are a schematic illustration of a cross-sectional side view and a corresponding detail view of the device, into which a cartridge provided with the enabler element according to the present invention is inserted;
- figures 14 and 14A are a schematic illustration of a cross-sectional side view and a corresponding detail view of the filtration device in which the cartridge provided with the enabler element of figure 13 is inserted;
- figures 15A and 15B are two perspective views from the bottom of the enabler element of figure 13;
- figure 16 is a detailed illustration of a cross-sectional front view of an additional embodiment of the enabler element according to the present invention;
- figures 17A, 17B, 18A, and 18B are two side views and two bottom views illustrating some of the details of the enabler element of figure 16;
- figures 19 and 19A are a schematic illustration of a cross-sectional side view and a corresponding detail view of the filtration device of figure 1, into which a cartridge provided with the enabler element according to another variant of the present invention is inserted;
- figures 20 and 20A are a schematic illustration of a cross-sectional side view and a corresponding detail view of the filtration device with the cartridge of figure 19 inserted;
- figures 21 and 21A are a schematic illustration of a cross-sectional side view and a corresponding detail view of the filtration device of figure 1, with a cartridge provided with the enabler element according to another variant of the present invention inserted;

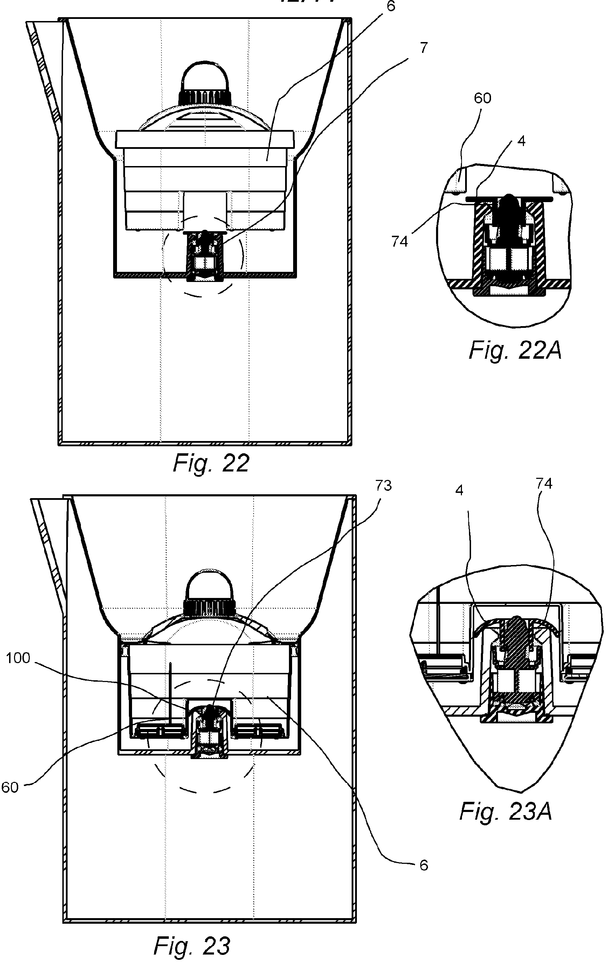

- figures 22, 22A, 23, and 23A are two schematic illustrations of a cross-sectional side view and a corresponding detail view of another variant of the enabler element of the present invention, with a valve shutter in the open and closed positions, respectively;
- figures 24A, 24B, 25A, and 25B illustrate two additional embodiments of the enabler element of the present invention, with the valve shutter of the filtration device in the open and closed positions, respectively;
- figure 26 is an additional embodiment of the valve element of the present invention; and
- figures 27A and 27B are detailed schematic illustrations of the valve element of figure 26 inserted into the valve seat of the filtration device with the valve shutter of the filtration device in the open and closed positions, respectively.

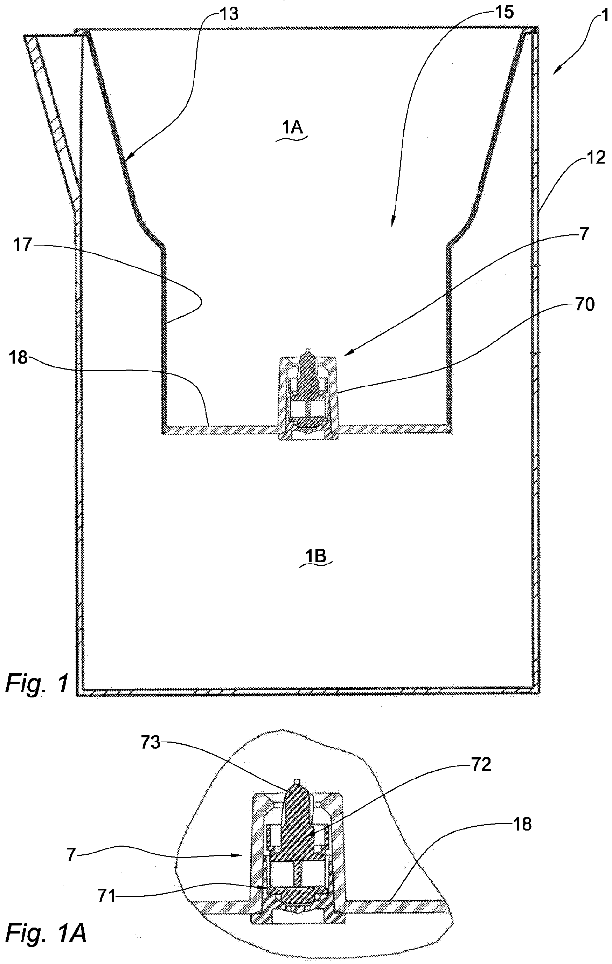

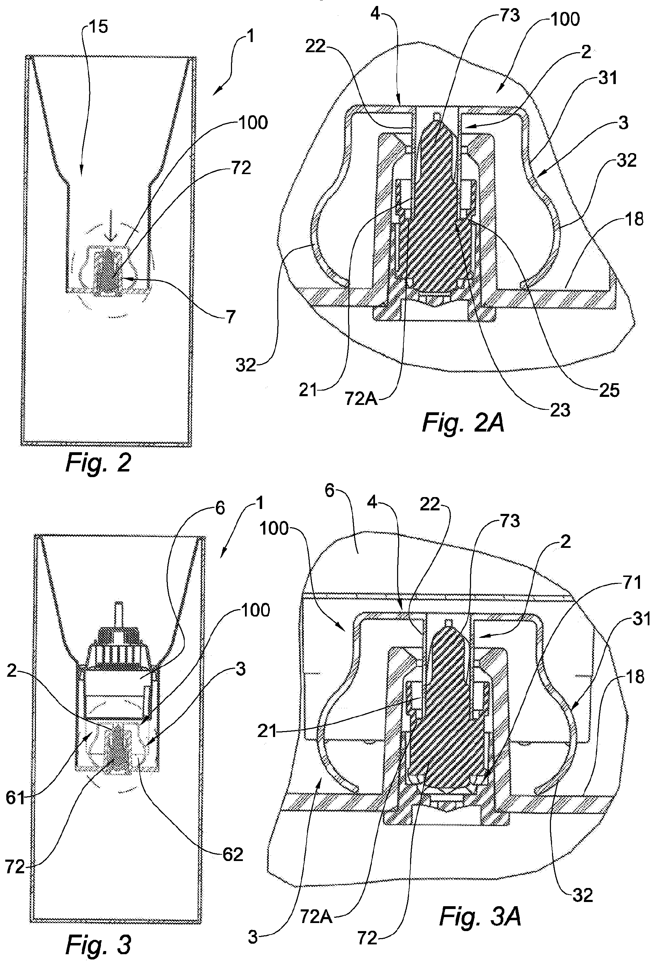

Initially with reference to figure 1, reference number 1 globally refers to a percolation filtration device including a pitcher 12 inside which a dividing element 13 (hopper) is placed, which divides pitcher 12 into an upper compartment 1A for holding water to be filtered, and a lower compartment 1B for holding filtered water. The two compartments, 1A and 1B, communicate exclusively through a pipe which forms a seat 15 for coupling to a filter cartridge 6, shown in figure 3. Seat 15 has a lateral skirt 17 and a bottom wall 18 in which there is an open valve passage 7, which is preferably the only opening for flow from the upper compartment to the lower compartment. According to a preferred embodiment, the valve passage 7 has a generally cylindrical shape with a sleeve-like section 70 projecting toward cartridge 6, where it is received in a recess in the form of a cutout 61 in the bottom 62 of the cartridge 6. In the distal portion of sleeve-like section 70, a valve seat 71 is made, with respect to the cartridge 6, on which a valve shutter 72 normally sits. Shutter 72 has an control portion 73 that extends within section 70 in such a way that, by acting on the control portion 73, it is possible to open the shutter 72 by moving it away from the valve seat 71. In this way passage 7, together with seat 71 and its shutter 72, form a flow-interception valve that, when enabled or open, allows liquid to flow from upper compartment 1A to lower compartment 1B through the filter cartridge 6, and when the valve is disabled or closed prevents communication between the two compartments.

In one embodiment, the shutter 72 may be made according to the description in patent application WO 2016 120174, with the shutter 72 having an end provided with angled surfaces which, when the valve is closed, couple with corresponding surfaces made on the bottom of the valve seat 71. Consequently, by moving the shutter away from the bottom of the valve seat, the valve can move to the open position and allow water to pass therethrough. According to the teachings of the prior art, the shutter can only be enabled by rotation of the shutter, generated in particular by the interaction between the helical surfaces made in the control portion 73 of the shutter and a tubular section extending, for example, from the bottom of the filter cartridge.

As shown in the figures, the invention makes it possible to open the valve passage 7 without necessarily rotating the shutter.

The applicant has indeed noted that it is possible to open the valve passage by holding the shutter 72 and lifting it directly upward, in light of the weights and forces involved in the filtration system described above.

In a preferred embodiment shown in figures 2 and 2A, an enabler element, identified as a whole by reference number 100, comprises a holding element 2, which can be inserted at least partially into the valve passage 7 of the interception valve, and a lifting device 3 designed to lift holding element 2 by moving it in an opening direction of the shutter.

As can be seen in figures 2A and 3A, when holding element 2 is inserted into the valve passage, it can be attached to the shutter 72. To that end, according to the means described below, for example, holding element 2 is configured to grasp and hold a portion of the valve shutter, preferably corresponding to the control portion 73. Preferably, the holding element 2 is in the form of a projection extending from a support portion 4 of the enabler element 100. According to a preferred embodiment, the holding element is designed to hold the shutter, once it has been grasped, in at least the translation direction parallel to the axis of rotation of the shutter. As will become clearer in the following, the force by which the holding element 2 holds the shutter is advantageously at least equal to the force of gravity and possibly the weight of the column of water on the shutter. It is nevertheless understood that these forces are typically quite minimal compared to the weight and dimensions of the shutter. Advantageously, the possibility of releasing shutter 72 from holding element 2 by exerting sufficient force in the direction of moving enabler element 100 and shutter 72 away from each other can be also provided.

With reference now to figures 2A and 3A, according to a preferred embodiment, holding element 2 comprises a resiliently deformable portion 21 that can fit over the portion of shutter 72 by moving enabler element 100 toward shutter 72. As shown schematically in figure 2A, in one embodiment enabler element 100 is brought to the shutter by being lowered through the seat 15.

Preferably, the resiliently deformable portion 21 is placed in a position corresponding to a tubular body 22 of the holding element 2.

This resiliently deformable portion 21 can advantageously be positioned at the open end 23' of the tubular body 22 so that the control portion 73 of the shutter can in effect fit inside tubular body 22.

Tubular body 22 therefore has dimensions such that, when it receives the portion of the shutter 72, it is elastically pushed following contact between the inside walls of the tubular body 22 and the portion is inserted therein.

The Applicant has noted how even a small deformation of the tubular body 22 is enough for the tubular body 22 to be able to hold the control portion 73 by interference, thus securing the shutter 72 to the holding element 2 by a force at least equal to that described earlier. Consequently, in this regard holding element 2 is capable of grasping and holding the portion 73 of the shutter.

In one embodiment, holding element 2 is designed in such a way that it is attached to the shutter along an axial translational direction thereof, i.e. its lifting direction.

According to another embodiment, it is attached to the shutter in rotational movements thereof.

More preferably, holding element 2 is designed so as to be attached both rotationally and translationally.

In other words, the holding element 2 is preferably designed to hold the shutter, once it has been grasped, at least in the translational direction parallel to the axis of rotation and/or rotationally about the axis of rotation.

In one embodiment, said holding element 2 defines a seat 23, for example defined by the tubular body 22, in which the portion of the valve shutter can be housed, so as to hold said portion as shown earlier.

Preferably, the seat 23 comprises at least one pair of opposing walls between which the portion of the valve shutter is held.

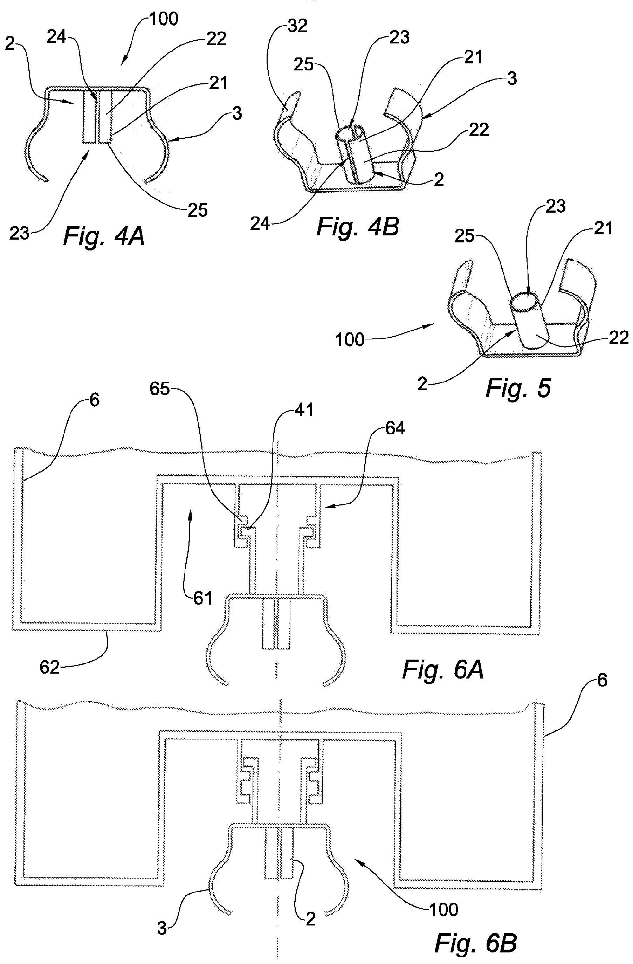

For the purpose of achieving this function, the seat defines the deformable portion 21, which may be shaped in the most suitable way for facilitating insertion of the portion 73. In one embodiment, the control portion 73 of shutter 72 has a tapered shape and, therefore, also a cylindrical development or, more generally, a shape suitable for enclosing the cross-section of the portion, may represent a cross-section suitable for deformable portion 21. However, for the purpose of simplifying the action of grasping and holding the portion 73, the tubular body 22 may comprise a notch 24 made at open end 23', as in the example of figures 4A and 4B. More preferably, the tubular body 22 comprises at least a pair of notches that are developed in parallel to the axial extension of the tubular body 22. In one embodiment, not shown in the figures, there is a plurality of notches defining fringes at the open end.

In one embodiment, which may possibly be combined with the features mentioned above, the tubular body 22 widens at open end 23', once again for the purpose of simplifying the insertion of the control portion 73 into the tubular body 22.

It is anyhow evident that deformable portion 21 can derive its deformability directly from the properties of the material, and therefore a simply cylindrical development is sufficient for the tubular body 22, as in the example shown in figure 5.

As illustrated thus far, holding element 2 therefore makes it possible to hold shutter 72 once it has been slipped over the shutter.

Once again With reference to figures 2A and 3A, enabler element 100 according to the present invention further comprises a lifting device 3, which is preferably also connected to the support portion 4, capable of lifting the holding element 2 by thus pushing shutter 72 held by holding element 2 in an opening direction. It must be noted that in the context of this invention, the lifting direction is a direction capable of moving the shutter away from the closed position, and it may therefore differ from a purely vertical direction, since an angled direction may also be considered.

In one embodiment, the lifting device 3 comprises a resilient body 31 designed in such a way as to push the holding element 2 in a lifting direction after contact with an abutment surface of the filtration system 1.

According to a first example, the abutment surface corresponds to the bottom wall 18 of filtration system 1.

In order to allow the resilient body 31 to abut bottom wall 18 without interfering with sleeve-like section 70, element 100 may comprise a transverse extension through which the resilient body can move away from the holding element 2.

In this way, when the holding element 2 is inserted into the valve passage 7, the resilient body 31 is located outside the valve passage 7 and can thus abut the bottom wall 18 of the dividing element 13 from which the valve passage 7 develops.

In one embodiment, particularly suitable for the configuration described above, resilient body 31 comprises a flexible blade 32. For the sake of construction simplicity, flexible blade 32 can extend from the holding element 2, thus forming both the resilient body 31 and the transverse extension. Advantageously, the blade configuration also allows for easy lateral travel of the water toward the valve seat.

As can be seen in figures 2-2A and 3-3A, when the holding element 2 is fit over the control portion of the shutter, the resilient body is compressed as a result of contact with bottom wall 18. As shown earlier, however, the holding element 2 is designed to hold the control portion and, when the resilient body 31 returns to its non-compressed position, for example because the action of the user's hand has ceased, the control portion 73 and therefore the shutter 72 as a whole will be moved upward.

This movement therefore makes it possible to move the shutter away from the bottom of the valve seat, thereby opening the valve without requiring any rotational movement. Indeed, as shown earlier, the force by which holding element 2 holds shutter 72 is advantageously at least equal to the force of gravity and the force of the column of water acting on the shutter. Consequently, the resilient body 31 actually works as a lifting device for holding element 2 and therefore also for shutter 72.

According to a preferred embodiment, in order to facilitate proper positioning of the holding element 2, for example in terms of axial positioning with respect to control portion 73 that it is supposed to hold, the actuating element 100 comprises an abutment edge 25 that defines an end-of-travel position for the holding element 2 in the valve passage 7.

In one embodiment, the abutment edge is defined at the end of the holding element 2 and abuts a widened part 72A of the shutter to limit the axial travel of the element 100. It should be noted that a greater end-of-travel may advantageously be defined for the shutter 72 in the valve passage, for example defined by a contact between widened part 72A and an upper narrowing in section 70. In this way it is possible to release shutter 72 by exerting sufficient upward force on the enabler element 100. As shown earlier, given the minimal amount of the forces involved, this action can be easily performed by any user. Once again with reference to figures 2A and 3A, in order to lift the shutter, it is therefore possible to use extensions for holding element 2 and resilient body 31 such that, when holding element 2 is in the end-of-travel position, resilient body 31 is compressed. Here again it must be noted that, given the dimensions and forces involved, it will be easy to push the enabler element to the end-of-travel position with a hand action, which can be felt by the user with equal ease.

In the present embodiment, to ensure that resilient body 31 is then compressed in the aforementioned end-of-travel position of holding element 2, the extension simply needs to be calibrated in a direction parallel to the lifting direction. In this regard, resilient body 31 in one embodiment has, in use, an extension in a direction parallel to the development direction of the valve passage 7 that is greater than the extension of the holding element 2 and the extension of the sleeve-like section 70 of the valve passage 7.

In one embodiment shown schematically in figures 6A-6B, enabler element 100 is attached to the cartridge 6 by a suitable connection element 64. Connection element 64 is designed to allow positioning of the enabler element 100 according to two axially-separated operating positions. In a first position, holding element 2 or, more in general the enabler element 100, projects more from cartridge 6 since, according to a preferred embodiment, it projects further from the bottom thereof. In a second position, holding element 2 is instead placed in a more proximal position with respect to cartridge 6.

According to a preferred embodiment, connection element 64 is made in such a way that, when cartridge 6 is inserted into seat 15 with enabler element 100 in the first position, the holding element 2 couples with the shutter 72 in the way described earlier. When cartridge 6 is pushed further into the seat, the enabler element 100 moves into the second position, thereby also bringing the shutter 72 closer to the cartridge, since shutter 72 is being held by holding element 2.

In one embodiment, the connection element 64 has a locking portion 65 in which the enabler element engages in the first position, preferably by interlocking with a protruding edge 41.

Locking portion 65 and/or protruding edge 41 are shaped in such a way that the enabler element 100 remains locked in the portion 65 when the holding element is being fit over the shutter and, once an end-of-travel position is reached with resilient body 31 compressed, protruding edge 41 is released from the locking portion so that the second position is allowed to be reached. This feature can be implemented by providing the locking portion 65 and/or the protruding edge 41 with partial deformability, i.e. requiring an additional action upon reaching the end-of-travel in order to achieve deformation of these components.

It is understood that locking element 65 and, more generally speaking, the concepts disclosed in connection with this embodiment, may also be applied to a component other than cartridge 6, for example a component in the form of a cap that is fit over the cartridge 6.

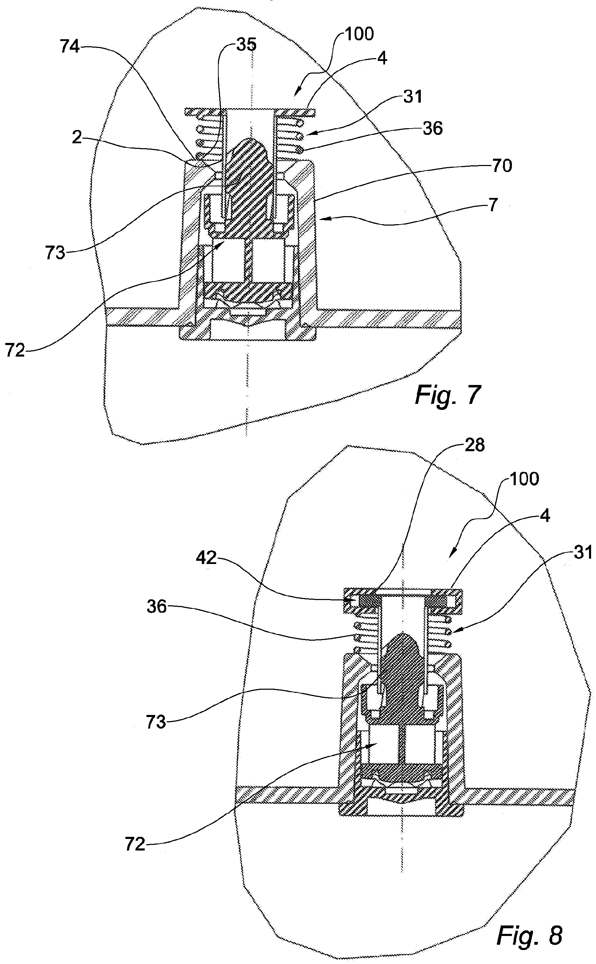

A second embodiment of the lifting device is shown in figure 7.

In this case, resilient body 31 comprises a helical spring 36 that works in a manner similar to that described earlier.

Preferably, helical spring 36 is coaxial with the sleeve-like section 70 of the valve passage 7, as well as the holding element 2. In one embodiment, helical spring 36 abuts an upper edge 74 of the sleeve-like section 70.

Consequently, in this case as well, inserting the holding element 2 into the valve passage 7, thus fitting control portion 73 of shutter 72 into holding element 2, it is possible to grasp and hold the shutter and also to compress helical spring 36 and therefore resilient body 31.

The end-of-travel condition can be achieved in this case either similarly to the way shown for the previous embodiment, or as a function of the properties of the helical spring 36, that is, when complete compression of the spring is achieved.

In this second case, therefore, the abutment edge 35 making it possible to define the end-of-travel position is defined on the resilient body 31.

In other words, in more general terms, the resilient body 31 can be configured in such a way as to abut the upper edge 74 of the valve passage 7, on which the abutment surface mentioned above is defined, when the holding element 2 is inserted into the valve passage 7.

Operation is similar to that described for the previous embodiment, in which the shutter is lifted by the elastic return action of resilient body 31, consisting in this case of the helical spring 36.

In one embodiment, holding element 2 is rotatably connected to the lifting device 3, as shown in the embodiment example of figure 8. This embodiment refers to the one previously described for figure 4, but it is evident that it can also be applied to other embodiments of the present invention.

This feature therefore allows for rotation of the shutter 72 once it has been grasped by the holding element 2, so that its position can possibly be set. With reference to figure 4, holding element 2 can be rotated, for example, by providing a circular flange 28 on0 the tubular body 22, fitting into a corresponding circular seat 42 made in the support portion 4 of the enabler element 100. Preferably, the helical spring 36 is connected to the support portion 101 as shown in connection with the previous embodiment.

It must be noted that, more generally, it is also possible in the other embodiments of the present invention to have the support portion 4 of the enabler element 100 combine holding element 2 and lifting device 3 and/or define a suitable portion for the actuating element 100 for inserting/removing it from the valve seat.

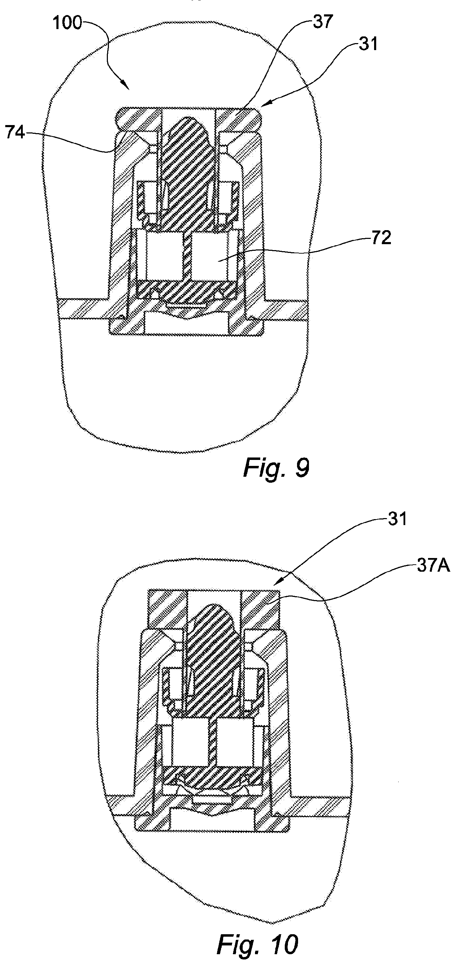

Additional embodiments are shown in figures 9 and 10.

In one embodiment, resilient body 31 comprises a portion made of elastically deformable plastic material 37 that can be deformed by bending. Preferably, resilient body 31 is shaped like a disk connected to the holding element 2. More generally, the elastically deformable plastic material 37 may extend along the perimeter of the holding element 2, without necessarily defining a complete or exact disk shape.

By appropriately designing the axial length of the holding element, when the holding element is inserted into the valve seat, it will be possible first to achieve contact between the disk and the upper edge 74 and, with the holding element 2 continuing to be pushed into the valve seat, bending of the disk. The elasticity properties of the material therefore make it possible to lift the shutter as a result of the elastic recovery that takes place once the action on the enabler element 100 is stopped.

In one embodiment, the resilient body 31 comprises a portion made of elastically deformable plastic material 37A that can be deformed by compression. Here again, it is possible to provide a shape comparable to the previous case for the portion made of deformable material 37A, which is compressed instead of bent, by a pushing action on the holding element 2. Operation of the lifting device therefore remains comparable to the previous case.

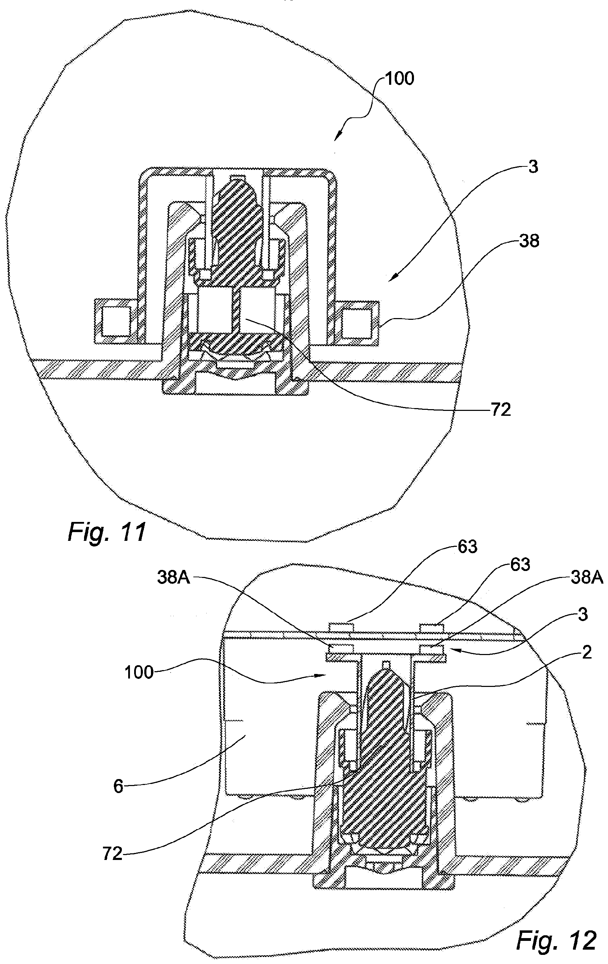

In one embodiment, shown with reference to figure 11, lifting device 3 comprises a float 38.

In this case, lifting of the enabler element 100 and therefore opening of the valve occur when water is placed inside the filtration system.

In fact, holding element 2 fits over control portion 73 as shown in connection with the other embodiments, and therefore, by sizing float 38 appropriately, it is possible to achieve a lifting function as in the previous embodiments. According to another embodiment, lifting device 3 comprises an element 38A capable of interacting magnetically with a corresponding element 63 secured to the replaceable cartridge 6. Here again, the operation is conceptually comparable to the operation presented earlier.

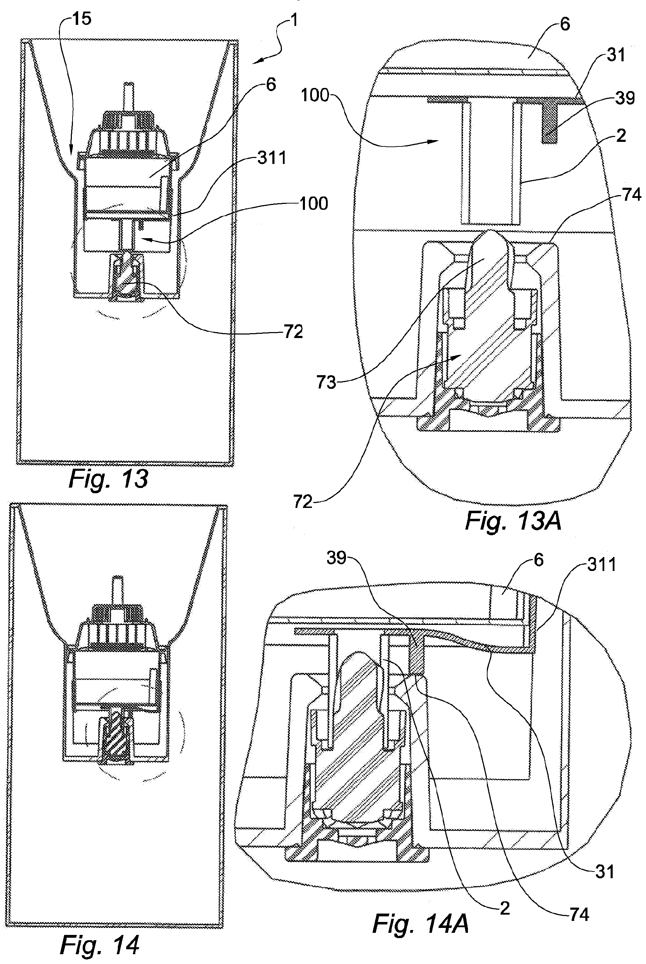

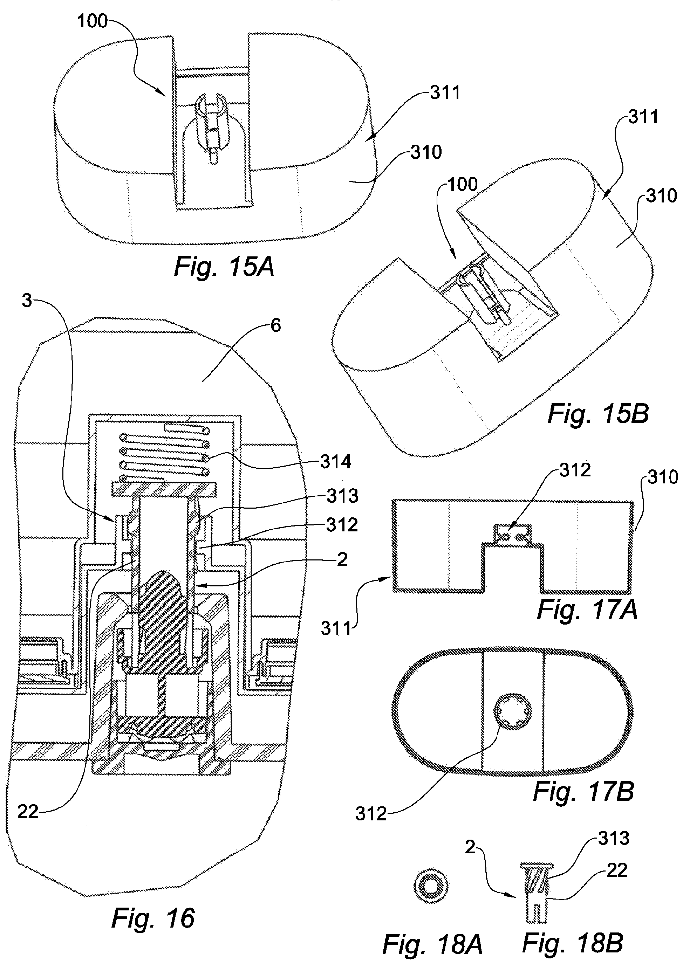

According to yet another embodiment, shown with reference to figures 13-13A and 14-14A, element 100 comprises a coupling portion 311 for coupling with the replaceable cartridge 6, preferably shaped like a cap 310 that partially encloses the cartridge, for example at the bottom of the cartridge. An example of this arrangement is shown in figures 15A and 15B.

Coupling between the coupling portion 311 and the cartridge 6 can occur by interference, i.e. by inserting the cartridge into the portion 311.

This operation can be done prior to insertion of the cartridge into its seat. According to a preferred embodiment, the resilient body 31 connects the coupling portion 311 and the holding element 2, as can be seen in figure 14A. In one embodiment, the resilient body is furthermore provided with a substantially rigid portion 39, made for example by means of a pin in figure 13A.

When the cartridge with the coupling portion 311 is inserted into the seat, the substantially rigid portion 39 comes into contact with the upper edge 74 or some other abutment surface, thus pushing the holding element 2 upward.

In this way a lifting action is again achieved, in this case advantageously associated with insertion of the cartridge into the filtration system.

It must also be pointed out that it is possible to have the coupling portion rigidly secured to the cartridge, in effect forming the bottom wall thereof. More generally, the lifting device may be connected to the replaceable cartridge 6.

The present invention, according to further inventive features, therefore refers to a replaceable cartridge in which an enabler element with the features mentioned in the various illustrated embodiments is provided. This solution will advantageously make it possible to produce a cartridge capable of opening the valve without causing the shutter to rotate.

With reference to figure 16, according to yet another preferred embodiment, the lifting device 3 is, in this case as well, connected to the replaceable cartridge 6 and comprises a guide surface 313 designed to convert a rotational movement of the holding element 2 into an axial movement of the holding element in a lifting direction.

To that end, according to a preferred embodiment, the coupling portion 311 comprises an opening through which the holding element 2 extends and where recesses 312 are defined allowing for coupling to the guide surface 313. Preferably, the guide surface 313 has a helical development and can be made, for example, from a series of ribs in such a way as to develop outside the holding element.

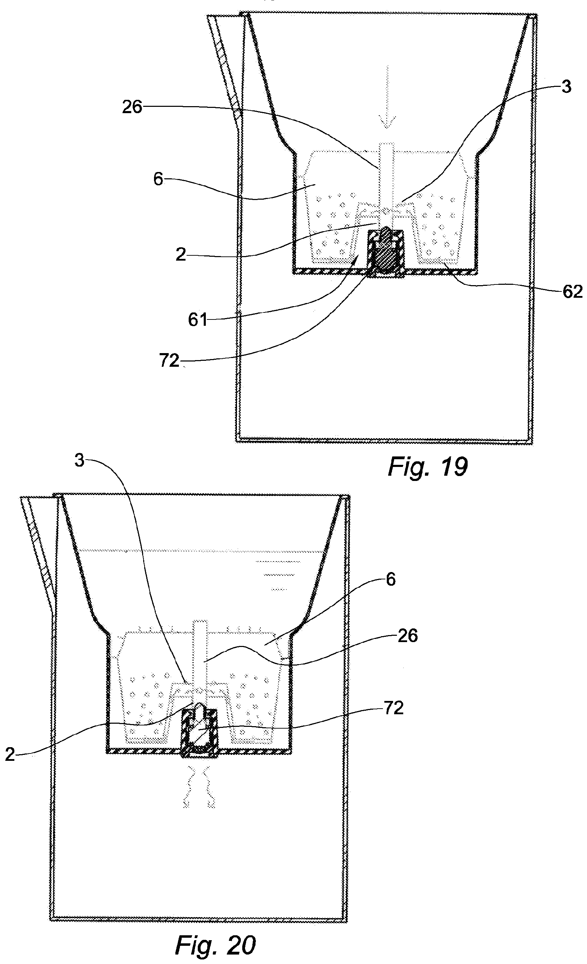

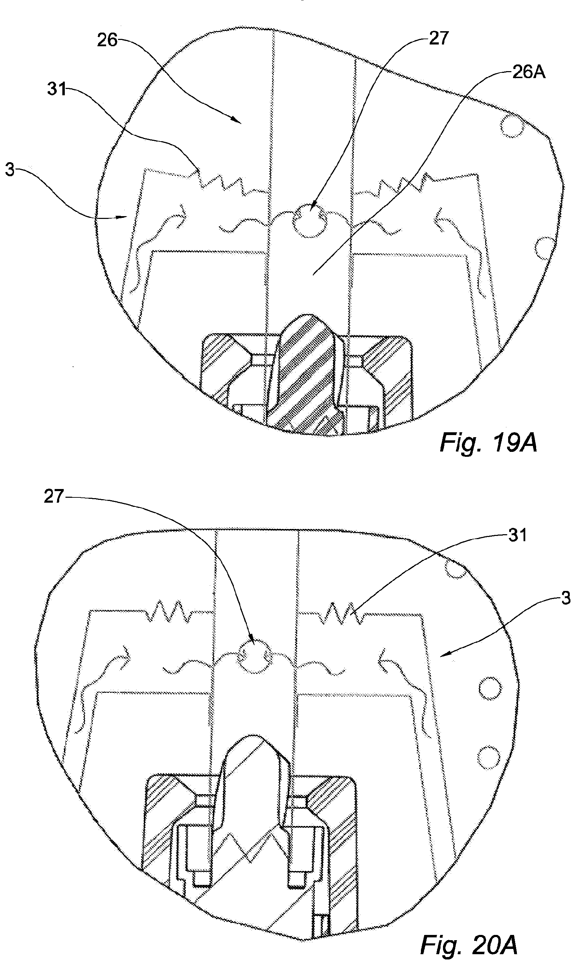

It is therefore obvious that with this configuration, a rotational movement of holding element 2 is associated with an axial movement, and vice versa. Consequently, when the cartridge is inserted into the seat with enough pressure on holding element 2, for example by auxiliary spring 314, shutter 72 is initially grasped and held, similarly to the previous cases. Once holding element 2 reaches the end-of-travel established by interaction with shutter 2, as the cartridge continues to be inserted an additional axial thrust is produced on holding element 2, which is forced to rotate, thus opening the valve in this case as well since, as shown previously, the shutter is designed so that, when rotated, it is lifted and opened. Therefore, in this case holding element 2 not only holds shutter 72 in the lifting direction, but also in the rotational direction. In another embodiment shown with reference to figures 19-19A and 20-20A, enabler element 100 comprises an extension 26 of holding element 2 that extends through said replaceable cartridge 6 in such a way as to be accessible from the opposite side of the cartridge, i.e. the side facing the outside of its seat. It is clear that this embodiment is also particularly well suited to direct implementation on the cartridge.

When the cartridge is inserted into its seat, it is indeed possible to act on the extension 26 by pushing it in such a way that the holding element 2, protruding from the opposite end, engages with the shutter 72.

The resilient body 31 or other lifting device makes it possible to lift the shutter and open the valve once the cartridge is in position and the pushing action on the extension 26 is stopped.

Preferably, the extension 26 defines a connecting pipe 26A connecting the holding element 2 and the inside of the cartridge. According to a preferred embodiment, pipe 26A comprises an opening 27 that opens inside the replaceable cartridge 6 in a position so as to receive filtered liquid from filter medium and direct it through the holding element 2.

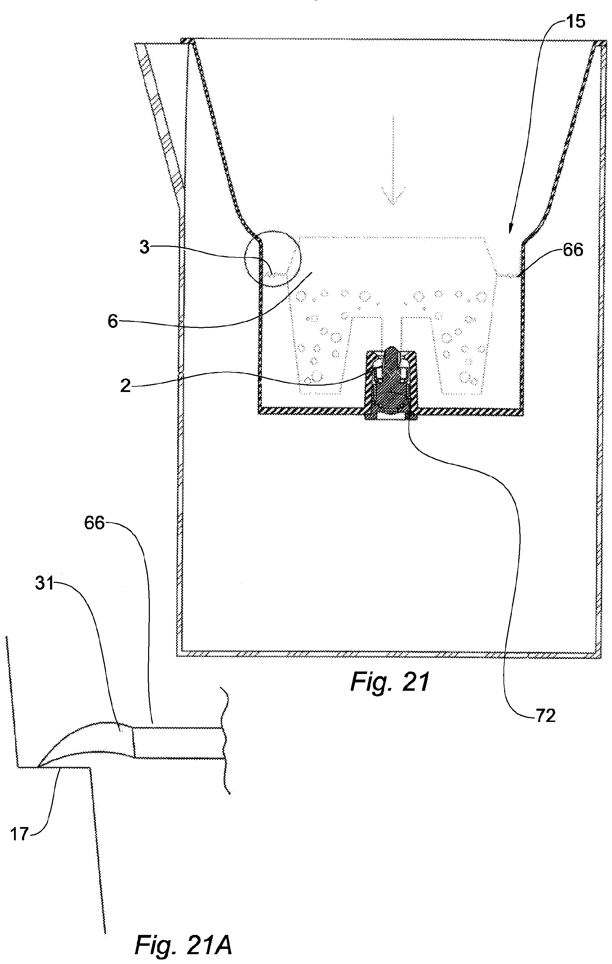

In another embodiment shown With reference to figures 21 and 21A, lifting device 3 is located at a sealing edge 66 of the cartridge 6. Preferably, the sealing edge runs along the perimeter of the cartridge and is designed to come into contact with the skirt 17 of the seat 15, making a sealed connection between the cartridge and seat so that travel between the upper and lower compartments can only occur through the filtration of the cartridge 6.

In one embodiment, the resilient body 31 of the lifting device 3 can be defined by an elastically deformable portion of the edge 66, which acts in a way similar to that indicated for the other embodiments of the lifting devices 3, by lifting the holding element 2 once it is holding the shutter 72.

As an example, the resilient body may consist of a portion made of rubber co-moulded with the edge of the cartridge.

These solutions advantageously make it possible to enclose all the components for opening the valve inside the cartridge, achieving a compact and reliable solution.

Based on yet another embodiment, the support portion 4 is designed so that, when the enabler element is slipped over the shutter, it extends beyond the upper edge 74.

In this way it is possible to use the filter cartridges 6 comprising two lateral extensions 60 that urge the support portion 4 and are inserted into recess 61 formed between the two extensions, achieving deformation thereof and lifting the shutter in a way comparable to the previous cases.

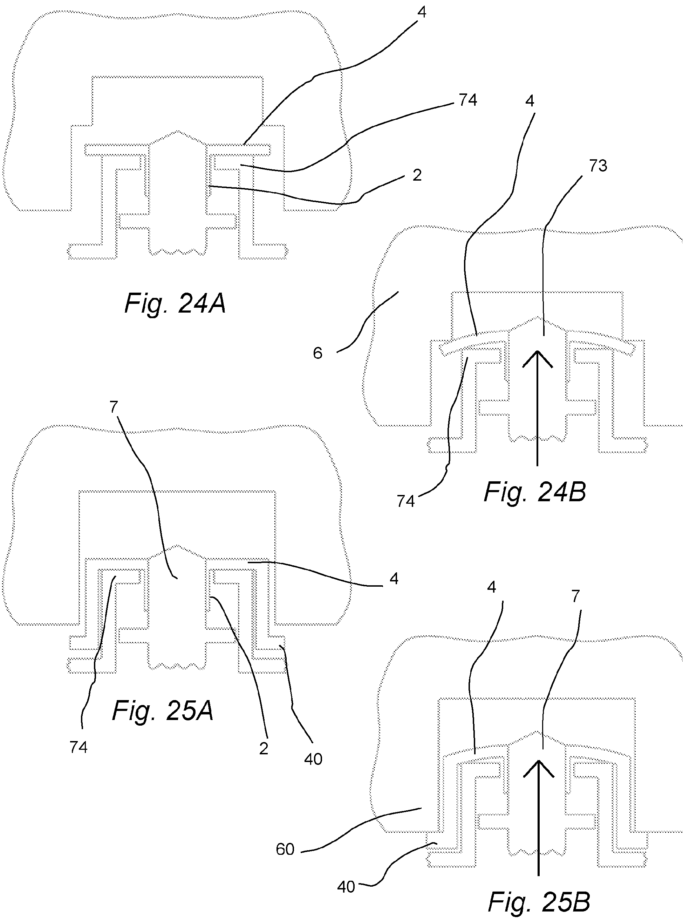

Figures 24A and 24B show a similar embodiment in which support portion 4 abuts the lateral extensions 60 of the cartridge instead of being drawn into recess 61.

Figures 25A and 25B also show another conceptually similar variant in which extensions 60 instead abut a protruding edge 40 of the support portion 4.

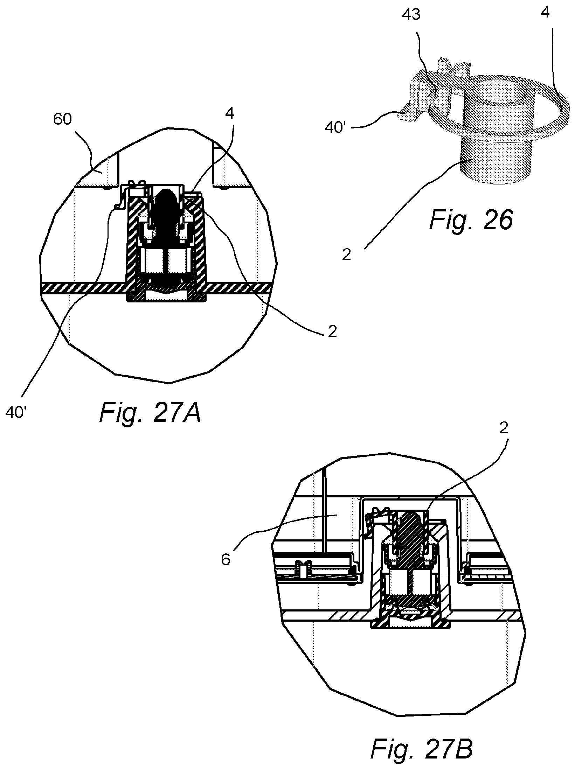

Consequently, with reference to figure 26, based on another embodiment, support portion 4 is hinged in relation to holding device 2.

According to a preferred embodiment, the support portion 4 forms a ring designed to be able to rest on the upper edge 74.

The holding element is preferably connected by an arm 40' that is hinged, for example, to the support portion 4 by means of pin 43.

As can be seen in figures 27A and 27B, when the cartridge is inserted it abuts the arm 40', preferably at an extension thereof, causing the arm to rotate and the shutter to be lifted.

The invention therefore solves the stated problem while simultaneously providing a plurality of benefits, including the possibility of easily opening the valve with the use of the holding element, and the subsequent lifting achieved automatically by the lifting device.

## Claims

1. An enabler element (100) for a flow-interception valve in filtration systems (1) using replaceable cartridges (6), comprising a holding element (2) that can be inserted, at least in part, into a valve passage (7) of the interception valve in order to interact with a normally-closed shutter (72) housed in the valve passage, said holding element (2) defining a seat (23) in which the portion of the valve shutter can be housed so as to grasp and hold the portion of the valve shutter once it is brought near said portion of the valve shutter, so as to make said holding element (2) attached to the portion of the valve shutter in an opening direction of said valve shutter, said enabler element further comprising a lifting device (3) designed to lift said holding element (2) thus moving the shutter held by the holding element in an opening direction.

2. An enabler element (100) according to claim 1, wherein said seat (23) comprises at least one pair of opposing walls between which the portion of the valve shutter is held.

3. An enabler element (100) according to claim 2, wherein said walls are substantially parallel or converge in the direction of an open end (23') of the seat (23), through which the portion of the valve shutter is inserted.

4. An enabler element (100) according to any one of the preceding claims,
wherein the shutter of the filtration system (1) can rotate about an axis of rotation, said holding element (2) being configured so as to hold the shutter, once grasped, at least during translational movement parallel to the axis of rotation and/or during rotation about the axis of rotation.

5. An enabler element (100) according to any one of the preceding claims,
wherein said holding element (2) comprises a resiliently deformable portion (21), wherein said seat (23) is defined by said resiliently deformable portion (21).

6. An enabler element (100) according to any one of the preceding claims,
wherein said seat (23) is defined by a projecting body (22), said projecting body (22) having a tubular shape.

7. An enabler element (100) according to any one of claims 5 to 6, comprising a support portion (4) from which said holding element (2) extends, said resiliently deformable portion (21) being formed as a projecting body (22) extending from said support portion (4).

8. An enabler element (100) according to claim 5 and 6, or claim 7, wherein said resiliently deformable portion (21) is placed at one end of said projecting body (22).

9. An enabler element (100) according to any one of claims 6 to 8, when dependent on claim 8, wherein said projecting body (22) has dimensions such that, when it receives the portion of the shutter, the inside wall of the projecting body (22) abuts the portion of the shutter in such a way as to be elastically urged.

10. An enabler element (100) according to any one of the preceding claims,
wherein the lifting device (3) comprises a resilient body (31) configured in such a way as to urge said holding element (2) in a lifting direction after contact with an abutment surface (18; 74) of the filtration system (4).

11. An enabler element (100) according to claim 10, further comprising an element for limiting or preventing rotation of the enabler element (100) with respect to the valve passage (7) when the holding element (2) is inserted therein.

12. An enabler element (100) according to any one of claims 10 to 11, comprising a coupling portion (311) for coupling to the replaceable cartridge (6), said resilient body (31) connecting said coupling portion (311) and said holding element (2), and being provided with a substantially rigid portion (39) designed to abut the abutment surface (74) and to deform said resilient body (31), thus pushing the holding element (2) upwards following insertion of the replaceable cartridge into a respective seat defined in the filtration system.

13. An enabler element (100) according to any one of claims 10 to 12,
wherein said resilient body (31) is connected to the replaceable cartridge (6), said enabler element (2) comprising an extension of said holding element that extends through said replaceable cartridge (6) so as to be accessible on a side facing the outside of a seat for coupling to the replaceable cartridge.

14. An enabler element according to any one of the preceding claims,
wherein said lifting device (3) is connected to a sealing edge (66) of the filter cartridge (6).

15. A filtering device (1) using replaceable cartridges (6), comprising a dividing element (13) defining an upper compartment (1A) for holding water to be filtered and a lower compartment (1B) for holding filtered water, a valve passage (7) defining an opening for outflow from the upper compartment (1A) to the lower compartment (1B), and inside which is housed a valve shutter (72) and an enabler element (100) made according to any one of the preceding claims.

## Patentansprüche

1. Freigabeelement (100) für ein Durchfluss-Unterbrechungsventil in Filtersystemen (1), die austauschbare Patronen (6) verwenden, umfassend ein Halteelement (2), das zumindest teilweise in einen Ventilkanal (7) des Unterbrechungsventils einsetzbar ist, sodass dieses mit einem normalerweise geschlossenen Verschluss (72) zusammenwirkt, der im Ventilkanal untergebracht ist, wobei das Halteelement (2) einen Sitz (23) definiert, in dem der Abschnitt des Ventilverschlusses aufnehmbar ist, um den Abschnitt des Ventilverschlusses zu ergreifen und zu halten, sobald dieser in die Nähe des Abschnitts des Ventilverschlusses gebracht wird, um das Halteelement (2) am Abschnitt des Ventilverschlusses in einer Öffnungsrichtung des Ventilverschlusses zu befestigen, wobei das Freigabeelement ferner eine Hubvorrichtung (3) umfasst, die dazu ausgelegt ist, das Halteelement (2) anzuheben, wodurch der vom Halteelement gehaltene Verschluss in einer Öffnungsrichtung bewegt wird.

2. Freigabeelement (100) nach Anspruch 1, wobei der Sitz (23) zumindest ein Paar gegenüberliegender Wände umfasst, zwischen denen der Abschnitt des Ventilverschlusses gehalten wird.

3. Freigabeelement (100) nach Anspruch 2, wobei die Wände im Wesentlichen parallel verlaufen oder in Richtung eines offenen Endes (23') des Sitzes (23) konvergieren, durch das der Abschnitt des Ventilverschlusses eingesetzt ist.

4. Freigabeelement (100) nach einem der vorhergehenden Ansprüche, wobei der Verschluss des Filtersystems (1) um eine Drehachse drehbar ist, wobei das Halteelement (2) dazu konfiguriert ist, den Verschluss nach dem Greifen zumindest während der Translationsbewegung parallel zur Drehachse und/oder während der Drehung um die Drehachse zu halten.

5. Freigabeelement (100) nach einem der vorhergehenden Ansprüche, wobei das Halteelement (2) einen elastisch verformbaren Abschnitt (21) umfasst, wobei der Sitz (23) durch den elastisch verformbaren Abschnitt (21) definiert ist.

6. Freigabeelement (100) nach einem der vorhergehenden Ansprüche, wobei der Sitz (23) durch einen vorragenden Körper (22) definiert ist, wobei der vorragende Körper (22) eine Röhrenform aufweist.

7. Freigabeelement (100) nach einem der Ansprüche 5 bis 6, umfassend einen Stützabschnitt (4), von dem sich das Halteelement (2) erstreckt, wobei der elastisch verformbare Abschnitt (21) als ein sich vom Stützabschnitt (4) erstreckender vorragender Körper (22) ausgebildet ist.

8. Freigabeelement (100) nach Anspruch 5 und 6 oder Anspruch 7, wobei der elastisch verformbare Abschnitt (21) an einem Ende des vorragenden Körpers (22) platziert ist.

9. Freigabeelement (100) nach einem der Ansprüche 6 bis 8, wobei der vorragende Körper (22), falls von Anspruch 8 abhängend, so dimensioniert ist, dass die Innenwand des vorragenden Körpers (22) beim Aufnehmen des Abschnitts des Verschlusses am Abschnitt des Verschlusses derart anliegt, dass dieser elastisch beaufschlagt wird.

10. Freigabeelement (100) nach einem der vorhergehenden Ansprüche, wobei die Hubvorrichtung (3) einen elastischen Körper (31) aufweist, der so konfiguriert ist, dass dieser das Halteelement (2) nach einem Kontakt mit einer Anlagefläche (18; 74) des Filtersystems (4) in eine Hubrichtung drückt.

11. Freigabeelement (100) nach Anspruch 10, ferner umfassend ein Element zum Begrenzen oder Unterbinden einer Drehung des Freigabeelements (100) in Bezug auf den Ventilkanal (7), wenn das Halteelement (2) darin eingesetzt ist.

12. Freigabeelement (100) nach einem der Ansprüche 10 bis 11, umfassend einen Verbindungsabschnitt (311) zum Verbinden mit der austauschbaren Patrone (6), wobei der elastische Körper (31) den Verbindungsabschnitt (311) und das Halteelement (2) verbindet, und mit einem im Wesentlichen starren Abschnitt (39) versehen ist, der so ausgelegt ist, dass dieser an der Anschlagfläche (74) anliegt und den elastischen Körper (31) verformt, wodurch das Halteelement (2) nach dem Einsetzen der austauschbaren Patrone in einen entsprechenden Sitz, der im Filtersystem definiert ist, nach oben gedrückt wird.

13. Freigabeelement (100) nach einem der Ansprüche 10 bis 12, wobei der elastische Körper (31) mit der austauschbaren Patrone (6) verbunden ist, wobei das Freigabeelement (2) eine Verlängerung des Halteelements umfasst, die sich durch die austauschbare Patrone (6) erstreckt, sodass diese auf einer der Außenseite eines Sitzes zugewandten Seite zum Verbinden mit der austauschbaren Patrone zugänglich ist.

14. Freigabeelement nach einem der vorhergehenden Ansprüche, wobei die Hubvorrichtung (3) mit einer Dichtkante (66) der Filterpatrone (6) verbunden ist.

15. Filtervorrichtung (1), die austauschbare Patronen (6) verwendet, umfassend ein Trennelement (13), das eine obere Kammer (1A) zur Aufnahme von zu filterndem Wasser und eine untere Kammer (1B) zur Aufnahme von gefiltertem Wasser definiert, einen Ventilkanal (7), der eine Öffnung für den Abfluss aus der oberen Kammer (1A) in die untere Kammer (1B) definiert, und in deren Inneren ein Ventilverschluss (72) und ein nach einem der vorhergehenden Ansprüche hergestelltes Freigabeelement (100) untergebracht sind.

## Revendications

1. Élément activateur (100) pour une vanne d'interception de flux dans des systèmes de filtration (1) utilisant des cartouches (6) remplaçables, comprenant un élément de retenue (2) qui peut être inséré, au moins en partie, dans un passage de vanne (7) de la vanne d'interception afin d'entrer en interaction avec un obturateur (72) normalement fermé contenu dans le passage de vanne, ledit élément de retenue (2) définissant un siège (23) dans lequel la portion de l'obturateur de vanne peut être contenue de façon à saisir et retenir la portion de l'obturateur de vanne dès qu'il est amené près de ladite portion de l'obturateur de vanne, de façon à rendre ledit élément de retenue (2) fixé à la portion de l'obturateur de vanne dans une direction d'ouverture dudit obturateur de vanne, ledit élément activateur comprenant en outre un dispositif de levage (3) conçu pour soulever ledit élément de retenue (2) déplaçant ainsi l'obturateur retenu par l'élément de retenue dans une direction d'ouverture.

2. Élément activateur (100) selon la revendication 1, dans lequel ledit siège (23) comprend au moins une paire de parois opposées entre lesquelles la portion de l'obturateur de vanne est retenue.

3. Élément activateur (100) selon la revendication 2, dans lequel lesdites parois sont sensiblement parallèles ou convergent dans la direction d'une extrémité ouverte (23') du siège (23), à travers laquelle la portion de l'obturateur de vanne est insérée.

4. Élément activateur (100) selon l'une quelconque des revendications précédentes, dans lequel l'obturateur du système de filtration (1) peut tourner autour d'un axe de rotation, ledit élément de retenue (2) étant configuré de façon à retenir l'obturateur, une fois saisi, au moins durant un mouvement en translation parallèle à l'axe de rotation et/ou durant une rotation autour de l'axe de rotation.

5. Élément activateur (100) selon l'une quelconque des revendications précédentes, dans lequel ledit élément de retenue (2) comprend une portion déformable de manière résiliente (21), dans lequel ledit siège (23) est défini par ladite portion déformable de manière résiliente (21).

6. Élément activateur (100) selon l'une quelconque des revendications précédentes, dans lequel ledit siège (23) est défini par un corps saillant (22), ledit corps saillant (22) ayant une forme tubulaire.

7. Élément activateur (100) selon l'une quelconque des revendications 5 à 6, comprenant une portion de support (4) à partir de laquelle ledit élément de retenue (2) s'étend, ladite portion déformable de manière résiliente (21) étant formée comme un corps saillant (22) s'étendant à partir de ladite portion de support (4).

8. Élément activateur (100) selon les revendications 5 et 6, ou la revendication 7, dans lequel ladite portion déformable de manière résiliente (21) est placée à une extrémité dudit corps saillant (22).

9. Élément activateur (100) selon l'une quelconque des revendications 6 à 8, lorsqu'elle dépend de la revendication 8, dans lequel ledit corps saillant (22) a des dimensions telles que, lorsqu'il reçoit la portion de l'obturateur, la paroi intérieure du corps saillant (22) vient buter contre la portion de l'obturateur de sorte à être poussée élastiquement.

10. Élément activateur (100) selon l'une quelconque des revendications précédentes, dans lequel le dispositif de levage (3) comprend un corps résilient (31) configuré de sorte à pousser ledit élément de retenue (2) dans une direction de levage après un contact avec une surface de butée (18 ; 74) du système de filtration (4).

11. Élément activateur (100) selon la revendication 10, comprenant en outre un élément pour limiter ou empêcher une rotation de l'élément activateur (100) par rapport au passage de vanne (7) lorsque l'élément de retenue (2) est inséré dans celui-ci.

12. Élément activateur (100) selon l'une quelconque des revendications 10 à 11, comprenant une portion d'accouplement (311) pour être accouplée à la cartouche (6) remplaçable, ledit corps résilient (31) reliant ladite portion d'accouplement (311) et ledit élément de retenue (2), et étant pourvu d'une portion sensiblement rigide (39) conçue pour venir buter contre la surface de butée (74) et pour déformer ledit corps résilient (31), poussant ainsi l'élément de retenue (2) vers le haut suite à une insertion de la cartouche remplaçable dans un siège respectif défini dans le système de filtration.

13. Élément activateur (100) selon l'une quelconque des revendications 10 à 12, dans lequel ledit corps résilient (31) est relié à la cartouche (6) remplaçable, ledit élément activateur (2) comprenant une extension dudit élément de retenue qui s'étend à travers ladite cartouche (6) remplaçable de façon à être accessible sur un côté faisant face à l'extérieur d'un siège pour un accouplement à la cartouche remplaçable.

14. Élément activateur selon l'une quelconque des revendications précédentes, dans lequel ledit dispositif de levage (3) est relié à un bord d'étanchéité (66) de la cartouche (6) de filtre.

15. Dispositif de filtration (1) utilisant des cartouches (6) remplaçables, comprenant un élément de division (13) définissant un compartiment supérieur (1A) pour retenir de l'eau devant être filtrée et un compartiment inférieur (1B) pour retenir de l'eau filtrée, un passage de vanne (7) définissant une ouverture pour un écoulement à partir du compartiment supérieur (1A) vers compartiment inférieur (1B), et à l'intérieur duquel sont contenus un obturateur (72) de vanne et un élément activateur (100) fait selon l'une quelconque des revendications précédentes.
